# EUROPEAN PATENT APPLICATION

(11) **EP 1 576 891 A1**
(43) Date of publication of application: **21.09.2005**
(21) Application number: 05251397.5
(22) Date of filing: 08.03.2005
(51) Int. Cl.: A23L 1/236, A23L 1/22

(54) **Method for drying neotame with co-agents**

(30) Priority: 16.03.2004 US 801513
(71) Applicant: KRAFT FOODS HOLDINGS, INC., Illinois 60093 (US)
(72) Inventor: Vellucci, Dominic J.Jr., Eastchester, New York 10709 (US)
(74) Representative: Smaggasgale, Gillian Helen

(57) **Abstract**

Improved methods are provided for drying neotame with co-agents to form a solid neotame-containing product having improved uniformity and improved stability.

## Description

### FIELD OF THE INVENTION

This invention relates to improved methods for drying neotame with co-agents. The neotame product obtained from the present invention is ideally suited for incorporation into a wide variety of food product as well as use as a tabletop sweetener.

### BACKGROUND OF THE INVENTION

Neotame (i.e., N-[N-(3,3-dimethylbutyl)-L-α-aspartyl]-L-phenylalanine 1-methyl ester) having the following structure 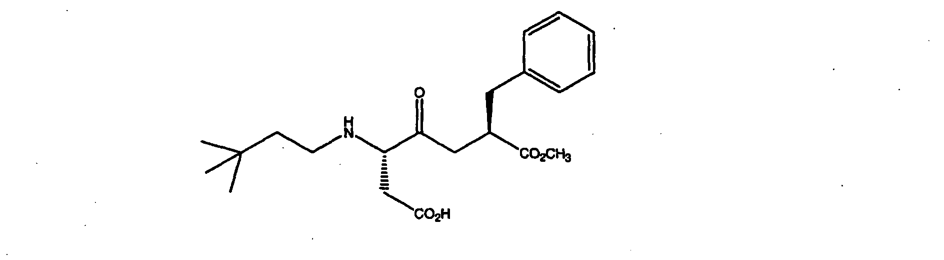 is a highly intense non-nutritive sweetening agent useful to impart sweetness to a wide variety of food products, as well as other products which benefit from sweetening, including but not limited to food products, oral care products, pharmaceutical products, and nutritional products such as nutraceuticals. See, e.g., U.S. Patent 5,480,668. Depending upon the food application for which it is used, this sweetener is about 7,000 to about 13,000 times as sweet as sucrose on a weight basis; in most food applications, this sweetness factor is about 8,000 times relative to sucrose. Thus, very small quantities of the sweetening agent may be used to sweeten foods without adding calories, or to modify flavors and tastes when used at levels below sweetening threshold.

On July 5, 2002, the U.S. Food and Drug Administration approved the use of neotame as a sweetening agent and flavor enhancer in a wide variety of foods (but not induding meat or poultry). Fed. Reg., vol. 67, no. 131 (July 9, 2002). Specific examples of food products in which neotame can be used include baked goods, non-alcoholic beverages (including soft drinks), chewing gum, confections and frostings, frozen desserts, gelatins and puddings, jams and jellies, processed fruits and fruit juices, toppings, and syrups. FDA Talk Paper T02-29 (July 5, 2002) (available as of the filing date of this application at www.fda.gov/bbs/topics/ANSWERS/2002/ANS01156.html).

The potency of this sweetener adds to the challenges of delivering it in a form in which the sweetener is uniform in its distribution in the product which it is sweetening. This characteristic, known simply as uniformity or content uniformity, is particularly important in products in which the neotame remains in dry form. Additionally, while neotame is not especially prone to dusting, in its powder form, it, like any powder, does produce a certain amount of dust. Given the potency, even loss of parts per million can impact the final cost of production of products incorporating neotame. An additional challenge results from neotame's use as a flavor and taste modifier as detailed in U.S. Patent Publication 2003/0008046. For these uses, neotame can be used at the part per billion level, so loss at even such a minute level can also impact the functionality of the neotame in such a product. Additionally, certain types of ingredients are commonly added to products which also include high intensity sweeteners. For example, tabletop sweetener products sold in packets typically include bulking agents such as maltodextrin or dextrose with maltodextrin. Powdered soft drinks typically include such ingredients for bulking, as well as acids such as citric acid for taste. The effectiveness of means to deliver these ingredients is important in terms of cost and product consistency.

More recently, efforts have been made to provide a dry and solid form of neotame with a co-agent (e.g., maltodextrin) to provide a product having desirable physical properties which can be used as a tabletop sweetener and as an ingredient in various food products. U.S. Patent Publication 2002/0081361 teaches co-drying of neotame with a co-agent using water as the solvent. Also disclosed are other solvent systems which can be used. A preferred binary solvent system contained water and ethanol in a 1:1 ratio. All of the examples in the publication, however, used solvent systems which only contained water. Although the methods disclosed therein did provide a solid neotame-containing product having the desired low levels of neotame, the product does not appear to provide sufficient neotame uniformity or stability for widespread use in many food products.

It would be desirable, therefore, to provide methods for producing solid neotame-containing products which provide the desired low levels of neotame as well as improved neotame uniformity and stability. The present invention provides such methods. The neotame-containing products of this invention have sufficiently improved neotame uniformity and stability to allow their use in a wide variety of applications and food products.

### SUMMARY OF THE INVENTION

In accordance with the present invention, improved methods are provided for drying neotame with co-agents to form a solid neotame-containing product having improved uniformity and stability. The neotame product obtained from the present invention, apparently due to its improved uniformity and stability, is ideally suited for incorporation into a wide variety of food product as well as use as a tabletop sweetener. The present solid neotame-containing products can be used to sweeten a wide variety of products including, but not limited to, drinks, foods, confectionaries, pastries, chewing gums, hygiene products, and toiletries, as well as cosmetic, pharmaceutical, and veterinary products. Moreover, the solid neotame-containing products of this invention can be used in other applications as well, including, for example, the applications included in U.S. Patent Publications 2002/0081361 and 2003/0008046 (e.g., flavor modifiers). Using the solid neotame-containing product of this invention, it is possible to uniformly add neotame to various products, including food products, at very low levels (e.g., parts per million or even parts per billion levels).

More specifically, the present invention relates to a method for drying neotame with a co-agent to provide a solid neotame-containing product having improved uniformity and improved stability, said method comprising:
(1) dissolving the neotame in an organic solvent to form a neotame solution wherein the ratio of neotame to organic solvent is about 2:1 to about 1:10;
(2) dissolving the co-agent in water to form a co-agent solution wherein the ratio of co-agent to water is about 2:1 to about 1:2;
(3) combining the neotame solution and the co-agent solution to form a combined solution wherein the ratio of the neotame solution to the co-agent solution is about 1:10000 to about 1:3 and wherein the neotame and the co-agent are completely soluble in the combined solution; and
(4) spray drying the combined solution to obtain the solid neotame-containing product;
wherein the solid neotame-containing product contains less than about 7 percent moisture, less than about 25 percent neotame, and has improved uniformity and stability.

This invention also relates to a method for drying neotame with a co-agent to provide a solid neotame-containing product having improved uniformity and improved stability, said method comprising
(1) dissolving the neotame in an organic solvent to form a neotame solution wherein the ratio of neotame to organic solvent is about 2:1 to about 1:10 and wherein the neotame is completely soluble in the organic solvent;
(2) dissolving the co-agent in water to form a co-agent solution wherein the ratio of co-agent to water is about 2:1 to about 1:2 and wherein the co-agent is completely soluble in the water;
(3) combining the neotame solution and the co-agent solution to form a combined solution wherein the ratio of the neotame solution to the co-agent solution is about 1:10000 to about 1:3 and wherein the neotame and the co-agent are completely soluble in the combined solution; and
(4) spray drying the combined solution to obtain the solid neotame-containing product;
wherein the solid neotame-containing product contains less than about 7 percent moisture, less than about 25 percent neotame, and has improved uniformity and stability.

This invention also relates to a method for drying neotame with a co-agent to provide a solid neotame-containing product having improved uniformity and improved stability, said method comprising
(1) dissolving the neotame in an organic solvent to form a neotame solution wherein the ratio of neotame to organic solvent is about 2:1 to about 1:10 and wherein the neotame is completely soluble in the organic solvent;
(2) dissolving the co-agent in water to form a co-agent solution wherein the ratio of co-agent to water is about 2:1 to about 1:2 and wherein the co-agent is completely soluble in the water;
(3) pasteurizing the co-agent solution;
(4) cooling the pasteurized co-agent solution to below about 110°F;
(5) combining the neotame solution and the cooled pasteurized co-agent solution to form a combined solution wherein the ratio of the neotame solution to the co-agent solution is about 1:10000 to about 1:3 and wherein the neotame and the co-agent are completely soluble in the combined solution; and
(6) spray drying the combined solution to obtain the solid neotame-containing product;
wherein the solid neotame-containing product contains less than about 7 percent moisture, less than about 25 percent neotame, and has improved uniformity and stability.

This invention also relates to a solid neotame-containing product having improved uniformity and improved stability, wherein the solid neotame-containing product is prepared by a method comprising
(1) dissolving the neotame in an organic solvent to form a neotame solution wherein the ratio of neotame to organic solvent is about 2:1 to about 1:10;
(2) dissolving the co-agent in water to form a co-agent solution wherein the ratio of co-agent to water is about 2:1 to about 1:2;
(3) combining the neotame solution and the co-agent solution to form a combined solution wherein the ratio of the neotame solution to the co-agent solution is about 1:10000 to about 1:3 and wherein the neotame and the co-agent are completely soluble in the combined solution; and
(4) spray drying the combined solution to obtain the solid neotame-containing product;
wherein the solid neotame-containing product contains less than about 7 percent moisture, less than about 25 percent neotame, and has improved uniformity and stability.

### BRIEF DESCRIPTION OF THE DRAWINGS

Figure 1 provides a flow diagram illustrating the general method of the present invention.
Figure 2 provides a flow diagram illustrating a more preferred embodiment of the method of the present invention.

### DETAILED DESCRIPTION

The present invention provides improved methods for drying neotame with co-agents to form a solid neotame-containing product having improved uniformity and stability. The solid neotame product obtained from the present invention, apparently due to its improved uniformity and stability, is ideally suited for incorporation into a wide variety of food products as well as use as a tabletop sweetener.

For purposes of this invention, improved uniformity and improved stability are defined as follows. Uniformity is evaluated using the measurement of neotame concentration over multiple samples from the total production run as detailed herein. In order to evaluate neotame uniformity over a typical production run (e.g., typically about 8000 pounds or more, wherein the solid neotame-containing product is collected in at least about 20 containers (typically drums or equivalent containers having capacities of about 50 pounds)), at least one sample (generally about 50 to about 100 g per sample) is collected from at least 16 of the drums or containers. If the number of drums in which the material is sufficient (i.e., about 160 drums or more), the samples are preferably taken from every 10 drums. Otherwise, the drums used for sample collections should be taken randomly from the beginning, middle, and end of the production run; if more than one sample is taken from a given drum, it should be taken from different locations within the drum. The neotame concentrations for at least 16 samples are determined using HPLC (preferably using a Nova-Pack C₁₈ or comparable reverse phase column with a mobile phase (pH about 3.7) of about 75 percent buffer (containing about 0.02M heptanesulfonic acid salt and about 0.5 percent triethylamine) and about 25 percent acetonitrile and UV detection at about 210nm).

An average neotame concentration is then calculated using all of the measured values. For the purposes of this invention, the material is considered uniform if at least 14 of the 16 samples (or comparable percentages if more than 16 samples are analyzed) fall within about 10 percent, preferably about 5 percent, and more preferably about 2 percent of the calculated average. In cases where 11 to 13 samples (or comparable percentages if more than 16 samples are analyzed) fall outside the range selected (i.e., 10, 5, or 2 percent), the outlying samples should be recollected and reevaluated for neotame concentration. A new average value using the newly collected and evaluated samples with the original samples that were within the first selected range is calculated and the individual samples (i.e., the recollected samples and the samples from the first sampling which were within the selected range) are compared with the newly calculated average. If 14 of the 16 samples (or comparable percentages if more than 16 samples are analyzed) used to calculate the new average fall with in the selected range, the overall sample is considered to have the required uniformity; if less than 14 of the 16 samples (or comparable percentages if more than 16 samples are analyzed) still fail this test, the overall sample fails the uniformity test. For smaller production runs, this test can be carried out in a similar manner by dividing the material into at least 16 samples.

For purposes of this invention, improved stability is determined by using the following or equivalent methods (i.e., Methods 1 or 2 described immediately below or equivalent methods). In Method 1, the initial neotame concentration (generally measured within one week, and preferably within two days, of production) is compared with the neotame concentration after storage of the sample for 12 weeks at about 100°F and about 70 to about 80 percent humidity in sealed moisture permeable containers (e.g., poly pouches). Improved stability using Method 1 is found where the decrease in neotame concentration after 12 weeks under the conditions described above is less than about 25 percent, preferably less than about 15 percent, and more preferably less than about 10 percent, as compared to the initial concentration. Method 2 is essentially the same as Method 1 except that a moisture impermeable container (e.g., foil pouch) is used and only the initial humidity is about 70 to 80 percent. Improved stability using Method 2 is found where the decrease in neotame concentration after 12 weeks under the conditions described above is less than about 10 percent, preferably less than about 8 percent, and more preferably less than about 6 percent, as compared to the initial concentration. For purposes of this invention, improved stability is found if the criteria for improved stability is met using either Method 1 or Method 2 (or equivalent methods) If desired, the same samples collected and used for testing uniformity can be used.

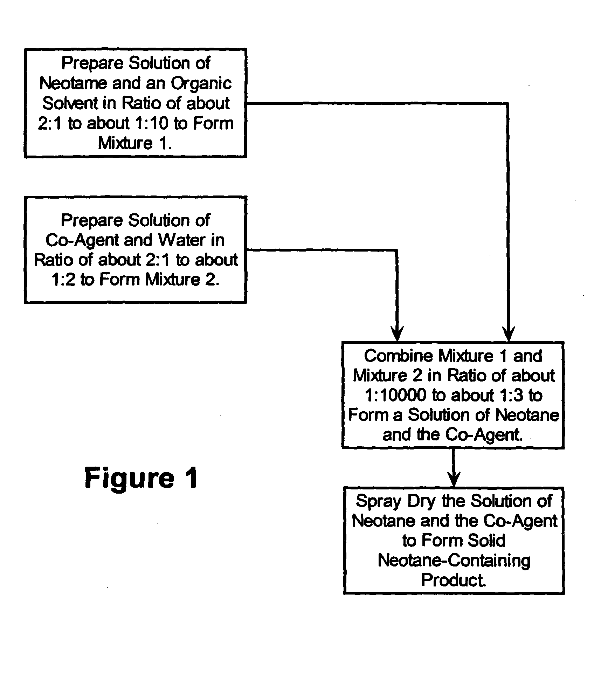

Figure 1 generally illustrates a preferred embodiment of the present invention wherein a water/organic solvent solution of neotame and a co-agent are dried to provide a solid neotame-containing product having improved uniformity and improved stability. The general method comprising (1) dissolving the neotame in an organic solvent to form a neotame solution wherein the ratio of neotame to organic solvent is about 2:1 to about 1:10 (generally about 10 to about 66 percent neotame in organic solvent) and wherein the neotame is completely soluble in the organic solvent; (2) dissolving the co-agent in water to form a co-agent solution wherein the ratio of co-agent to water is about 2:1 to about 1:2 and wherein the co-agent is completely soluble in the water; (3) combining the neotame solution and the co-agent solution to form a combined solution wherein the ratio of the neotame solution to the co-agent solution is about 1:10000 to about 1:3 (generally about 0.01 to about 25 percent neotame solution) and wherein the neotame and the co-agent are completely soluble in the combined solution; and (4) spray drying the combined solution to obtain the solid neotame-containing product; wherein the solid neotame-containing product contains less than about 7 percent moisture, less than about 25 percent neotame, and has improved uniformity and stability. For purposes of this invention, "completely soluble" is intended to mean that at least 99 percent, preferably at least 99.9 percent and most preferably all of the ingredients (e.g., neotame or co-agent in steps (1) and (2), respectively, or both neotame and co-agent in step (3) goes into solution. Although preferred, it is not necessary for the ingredients (e.g., neotame or co-agent) in steps (1) and (2) to be dissolved completely so long as neotame and co-agent are completely soluble in the combined solution formed in step (3). In other words, slurries of neotame in the organic solvent and/or slurries of the co-agent in water are acceptable, although not preferred, so long as the required completely soluble solution is obtained after mixing the two solutions to form the solution to be spray dried.

Neotame is dissolved in an organic solvent at a ratio in a range of about 2:1 to about 1:10 of neotame to organic solvent to form a neotame/organic solvent solution. Preferably the ratio of neotame to organic solvent is in a range of about 2:1 to about 1:2. More preferably the ratio of neotame to organic solvent is about 1:1. The neotame is preferably completely soluble in the organic solvent. If desired the temperature of the neotame/organic solvent mixture can be increased to increase the rate of solubility. Generally, however, the temperature should not exceed about 110°F in order to prevent thermal degradation of the neotame; preferable this temperature should not exceed about 100°F. Even more preferably the temperature of the neotame/organic solvent mixture should be in the range of about 20° to about 70°F. Both the temperature and the ratio of neotame and organic solvent can be adjusted within the ranges given to insure complete solubility of the neotame. Examples of suitable organic solvents include methanol, ethanol, ethylene glycol, propylene glycol, glycerin, ethyl acetate, triacetin, and mixtures thereof. Of course, each organic solvent may require different temperatures and/or ratios of neotame to the organic solvent to insure complete solubility of the neotame. The preferred organic solvent is ethanol containing about 5 percent water.

The co-agent is dissolved in water at a ratio in a range of about 2:1 to about 1:2 of co-agent to water to form an aqueous co-agent solution neotame/organic solvent solution. Preferably the ratio of co-agent to water solvent is in a range of about 1.5:1 to about 1:1.5. More preferably the ratio of co-agent to water solvent is about 1:1. The co-agent effectively acts as a carrier of bulking agent in the solid neotame-containing products of this invention. The co-agent preferably is completely soluble in the water solution. If desired the temperature of the co-agent/water mixture can be increased to increase the rate of solubility or for other reasons (e.g., pasteurization as discussed below). Generally, the temperature can be higher and, in some cases as discussed below, preferably is higher than the about 110°F limit for the neotame/organic solvent mixture. Both the temperature and the ratio of co-agent and water solvent can be adjusted within the ranges given to insure complete solubility of the co-agent. Examples of co-agents that may be used in the present invention include hydrolyzed starch materials, starches, lactose, dextrose, maltodextrin, dextrose with maltodextrin, polydextrose, sugar alcohols, hydroxypropylmethylcellulose, edible organic acids, gums (e.g., gum arabic, guar gum, gellan, and the like), and mixtures thereof. Generally, maltodextrin is the preferred co-agent. For solid neotame-containing products which are intended to be used in a specific product which normally contain one of the co-agents that can be used to prepare the solid neotame-containing product, it may be preferred to use that particular co-agent in making the solid neotame-containing product. For example, certain puddings normally require a starch; thus, a solid neotame-containing product prepared with a starch co-agent could be used, thereby reducing the amount of starch which must be added as a separate ingredient. For at least some beverages, it may be preferred to use a mixture of maltodextrin and citric acid (generally in a ratio of about 3:1 to about 1:3, respectively) as the co-agent in preparing the solid neotame-containing product. One of ordinary skill in the art can easily determine the optimal co-agent or mixture of co-agents to prepared the solid neotame-containing product for use in specific products. The solid neotame-containing product using any of the listed co-agents should be acceptable in most food applications.

Once the neotame and organic solvent solution and the aqueous co-agent solution are prepared, they are combined in a ratio of about 1:10000 to about 1:3, preferably about 1:50 to about 1:2, and more preferably about 1:20 to about 1:1, respectively. The temperature of the solution prior to and during mixing, as well as during the later spray drying step discussed below, should be below about 110°F and preferably less than about 90°F. Even more preferably, the temperature during the just mentioned operations should be about 70 to about 90°F. Generally, the mixing time and the degree of agitation during mixing is not critical so long as the neotame and the co-agent are completely soluble in the final solution. Typically, mixing for about 2 to about 10 minutes with mild agitation is sufficient. Longer mixing times and/or stronger agitation can be used, and in some cases may be necessary (especially if the neotame/organic solvent solution and/or the aqueous co-agent solution are in the form of slurries). As noted above, it is preferred that the neotame and co-agent ingredients are in a completely soluble form in their respective solvent systems prior to the mixing step.

Once the combined mixture has been formed wherein both the neotame and the co-agent are completely soluble in the solvent system (water with minor amount of organic solvent), the combined mixture is then spray dried to obtain a solid neotame-containing product having improved uniformity and improved stability. Spray drying conditions should be used in order to provide a moisture content of less than about 7 percent. Preferably, the moisture content is in the range of about 1 to about 6 percent, more preferably about 1 to 5 percent, and most preferably about 3 to 5 percent. Preferably, the average particle size is in the range of about 25 to about 500 microns and more preferably about 50 to about 150 microns. Although spray drying is preferred, other drying techniques (e.g., freeze drying, vacuum drying, belt drying, and the like) may be used so long as a moisture content of less than about 7 percent can be obtained; as with spray drying, preferably the moisture content is in the range of about 1 to about 6 percent, more preferably about 1 to 5 percent, and most preferably about 3 to 5 percent.

Conventional spray drying equipment and procedures can be used so long as the desired moisture content for the solid neotame-containing product is obtained. As noted above, the slurry temperature during spray drying should be below about 110°F, preferably below than about 90°F, and more preferably, about 70 to about 90°F. Examples of spray dryers that are suitable for use in this invention include, but are not limited to, co-current nozzle tower spray dryers, co-current rotary atomizer spray dryers, countercurrent nozzle tower spray dryers, mixed-flow fountain nozzle spray dryers, fluidized spray dryers (preferably with fines recycle and a second stage dryer), and the like.

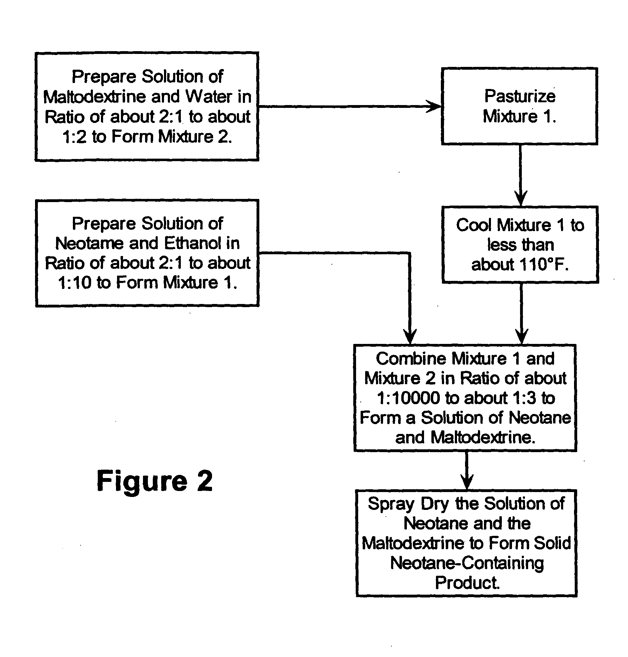

Figure 2 illustrates a more preferred embodiment of the present invention using ethanol as the organic solvent and maltodextrin as the co-agent. Although these preferred components are used as the organic solvent and co-agent in the figure, other organic solvents and co-agents may be used in this preferred embodiment if desired, and in some applications may even be preferred. The embodiment illustrated in Figure 2 is similar to that provided in Figure 1 except for the pasteurization of Mixture 2 (i.e., the aqueous co-agent solution) and subsequent cooling the pasteurized Mixture 2 prior to mixing with Mixture1.

Mixtures 1 and 2 are prepared as described above. Preferably Mixture 1 is then pasteurized under high temperature/short time (HTST) conditions to improve the microbiological stability of the final solid neotame-containing product. Generally, this pasteurization step is carried out at a temperature of about 150 to about 165°F for about 5 minutes to about 30 seconds, so long as the selected temperature/time combination is sufficient for pasteurization. Pasteurization at about 160°F for about 1 minute has been found to be effective. The pasteurized aqueous co-agent solution is then cooled to below about 110°F, preferably below than about 90°F, and more preferably, about 70 to about 90°F, before mixing with the neotame/organic solvent solution. Such mixing is carried out as described above to form the solution of neotame and co-agent, and then spray dried as described above to form the final solid neotame-containing product.

The resulting solid neotame-containing product may be used as generally as described in U.S. Patent Publication 2002/0081361; other uses will be apparent to those skilled in the art. For example, the solid neotame-containing products prepared by this invention are ideally suited for use as a sweetener for use in various food products (whether prepared for retail sale or in the home) or as a tabletop sweetener (whether packaged in individual packets or in larger containers). As noted above, the co-agent used may, if desired, be selected based on the specific ingredients used in a particular product, thereby reducing the level of added ingredient to be lower based on the amount of sweetener used. Generally, the neotame concentrations which can be obtained from the above-described methods are about 0.005 to about 5 percent, preferably about 1 to about 4, and most preferably about 2 percent. Of course, the amounts of neotame and co-agent may be adjusted within the limits described above in order to tailor the physical properties of the solid neotame-containing product. For example, the concentration of neotame in the final product may vary depending on the end product (e.g., a sweetener with co-agent to be added to powdered soft drinks) or product form (e.g., a tabletop sweetener product designed to be equivalent with table sugar in terms of amount of sweetness delivered per teaspoon). The final neotame concentration may be adjusted by varying the relative amounts of ingredients in the process described above so long as they are maintained in the ranges specified above. Alternatively, the final neotame concentration may be adjusted by adding solid ingredient (e.g., the same co-agent used to prepare the solid neotame-containing product or other solid ingredients which will be included in the final product to which the solid neotame-containing product is used to sweeten). Using this alternative method for adjusting the neotame concentration, care must be taken to insure sufficient uniformity for the intended propose of the final product. This alternative method will generally allow the production of solid neotame-containing products having lower neotame concentrations than can be obtained using the ranges of ingredients specified above.

The following examples are intended to illustrate the invention and not to limit it. Numerous modifications may be made by those skilled in the art without departing from the true spirit and scope of the invention. Unless noted otherwise, all percentages and ratios are by weight. All references cited herein are hereby incorporated by reference in their entireties; such references, include, but are not limited to, patents, patent publications, other publications, and the like.

### EXAMPLES

**Example 1.** In a first pilot plant, 0.95 Ibs of neotame was dissolved in 0.95 lbs of ethyl alcohol (95%). In a separate tank, 48.4 Ibs of water and 50 Ibs of maltodextrin (18 DE) were mixed with vigorous agitation to form a slurry. The slurry was heated to about 160°F, held for one minute, and then cooled to 80°F. The neotame solution was added to the cooled maltodextrin slurry, mixed for about 5 minutes, and then spray dried using a Niro FSD-4 pilot plant dryer (inlet air temperature 320°F; outlet air temperature 180°F; fluid bed temperature 135°F; and fluidizing air temperature 140°F). The final product moisture content was about 4.2 percent with a neotame level of about 0.88 percent (standard deviation of about 0.25 percent) as determined by HPLC. Particle size ranged from about 30 to about 250 microns.

**Example 2.** In a second pilot plant, 4 Ibs of neotame was dissolved in 4 Ibs of ethyl alcohol (95%). In a separate tank, 200.2 lbs of water and 206 Ibs of maltodextrin (10 DE) were mixed with vigorous agitation to form a slurry. The slurry was heated to about 160°F, held for one minute, and then cooled to 85°F. The neotame solution was added to the cooled maltodextrin slurry, mixed for about 5 minutes, and then spray dried using a Whirl-Jet nozzle with a 1.0 orifice and a 1.0 whirl chamber (inlet air temperature 350°F; outlet air temperature 210°F). The final product moisture content was about 5 percent with a neotame level of about 1.8 percent (standard deviation of about 0.04 to about 0.31 percent) as determined by HPLC.

**Example 3.** In a large scale run, 252 Ibs of ethyl alcohol (95%) was pumped into jacketed mix tank. Neotame (180 Ibs) was slowly to the alcohol with agitation. Heat (less than about 95°C) was then applied via the jacket to facilitate dissolution of the neotame. In a separate batch tank, 4854 Ibs of water added, followed by the addition of 4638.2 lbs of maltodextrin (10 DE) with vigorous agitation. The maltodextrin slurry was then heated to 160°F, held at that temperature for about 10 minutes, and then cooled to less than about 90°F. The neotame solution (215.8 Ibs) was added to the cooled maltodextrin slurry, mixed for about 5 minutes, and then spray dried using an APV Anhydro spray dryer equipped with a rotary atomizer (inlet air temperature 370°F; outlet air temperature 170°F; atomizer speed 6500 rpm). The final product moisture content was about 4.5 percent with a neotame level of about 1.8 percent (standard deviation of about 0.02 to about 0.38 percent) as determined by HPLC. Stability was determined by storing the resulting product in both moisture permeable poly pouches(i.e., Method 1 above) and in moisture impermeable foil pouches (i.e., Method 2 above) for 13 weeks at 100°F and 75 percent relative humidity. For Method 1, about 80.2 percent (standard deviation of about 1.1 percent) of the neotame remained (thus, a decrease in the neotame concentration of less than about 20 percent). For Method 2, about 98.4 percent (standard deviation of about 0.01 percent) of the neotame remained (thus, a decrease in the neotame concentration of less than about 2 percent).

**Example 4**. A stabilized neotame starch product can be prepared as described in Examples 1-3 by substituting modified or unmodified starch for the maltodextrin of those examples.

## Claims

1. A method for drying neotame with a co-agent to provide a solid neotame-containing product having improved uniformity and improved stability, said method comprising:
(1) dissolving the neotame in an organic solvent to form a neotame solution wherein the ratio of neotame to organic solvent is about 2:1 to about 1:10;
(2) dissolving the co-agent in water to form a co-agent solution wherein the ratio of co-agent to water is about 2:1 to about 1:2;
(3) combining the neotame solution and the co-agent solution to form a combined solution wherein the ratio of the neotame solution to the co-agent solution is about 1:10000 to about 1:3 and wherein the neotame and the co-agent are completely soluble in the combined solution; and
(4) spray drying the combined solution to obtain the solid neotame-containing product;
wherein the solid neotame-containing product contains less than about 7 percent moisture, less than about 25 percent neotame, and has improved uniformity and stability.

2. A method for drying neotame with a co-agent to provide a solid neotame-containing product having improved uniformity and improved stability, said method comprising:
(1) dissolving the neotame in an organic solvent to form a neotame solution wherein the ratio of neotame to organic solvent is about 2:1 to about 1:10 and wherein the neotame is completely soluble in the organic solvent;
(2) dissolving the co-agent in water to form a co-agent solution wherein the ratio of co-agent to water is about 2:1 to about 1:2 and wherein the co-agent is completely soluble in the water;
(3) combining the neotame solution and the co-agent solution to form a combined solution wherein the ratio of the neotame solution to the co-agent solution is about 1:10000 to about 1:3 and wherein the neotame and the co-agent are completely soluble in the combined solution; and
(4) spray drying the combined solution to obtain the solid neotame-containing product;
wherein the solid neotame-containing product contains less than about 7 percent moisture, less than about 25 percent neotame, and has improved uniformity and stability.

3. The method of Claim 1 or 2, wherein the co-agent solution is subjected to pasteurization conditions and then cooled to below about 100°F prior to step (3).

4. A method for drying neotame with a co-agent to provide a solid neotame-containing product having improved uniformity and improved stability, said method comprising
(1) dissolving the neotame in an organic solvent to form a neotame solution wherein the ratio of neotame to organic solvent is about 3:1 to about 2:1 and wherein the neotame is completely soluble in the organic solvent;
(2) dissolving the co-agent in water to form a co-agent solution wherein the ratio of co-agent to water is about 2:1 to about 1:2 and wherein the co-agent is completely soluble in the water;
(3) pasteurizing the co-agent solution;
(4) cooling the pasteurized co-agent solution to below about 110°F;
(5) combining the neotame solution and the cooled pasturized co-agent solution to form a combined solution wherein the ratio of the neotame solution to the co-agent solution is about 1:10000 to about 1:3 and wherein the neotame and the co-agent are completely soluble in the combined solution; and
(6) spray drying the combined solution to obtain the solid neotame-containing product;
wherein the solid neotame-containing product contains less than about 7 percent moisture, less than about 25 percent neotame, and has improved uniformity and stability.

5. The method of any one of Claims 1 to 4, wherein the moisture and the average particle size of the solid neotame-containing product is about 1 to 5 percent and about 25 to about 500 microns, respectively.

6. The method of any one of Claims 1 to 4, wherein the moisture and the average particle size of the solid neotame-containing product is about 1 to 5 percent and about 50 to about 150 microns, respectively.

7. The method of any one of Claims 1 to 4, wherein the moisture and the average particle size of the solid neotame-containing product is about 3 to 5 percent and about 50 to about 150 microns, respectively.

8. The method of any one of Claims 1 to 7, wherein the organic solvent is selected from the group consisting of methanol, ethanol, ethylene glycol propylene glycol, glycerin, ethyl acetate, triacetin, and mixtures thereof and wherein the co-agent is selected from the group consisting of hydrolyzed starch materials, starches, lactose, dextrose, maltodextrin, dextrose with maltodextrin, polydextrose, sugar alcohols, hydroxypropylmethylcellulose, edible organic acids, gums, and mixtures thereof.

9. The method of any one of Claims 1 to 8, wherein the organic solvent is ethanol and co-agent is maltodextrin.

10. A solid neotame-containing product having improved uniformity and improved stability, wherein the solid neotame-containing product is prepared by a method comprising
(1) dissolving the neotame in an organic solvent to form a neotame solution wherein the ratio of neotame to organic solvent is about 3:1 to about 2:1;
(2) dissolving the co-agent in water to form a co-agent solution wherein the ratio of co-agent to water is about 2:1 to about 1:2;
(3) combining the neotame solution and the co-agent solution to form a combined solution wherein the ratio of the neotame solution to the co-agent solution is about 1:10000 to about 1:3 and wherein the neotame and the co-agent are completely soluble in the combined solution; and
(4) spray drying the combined solution to obtain the solid neotame-containing product;
wherein the solid neotame-containing product contains less than about 7 percent moisture, less than about 25 percent neotame, and has improved uniformity and stability.

11. The solid neotame-containing product of Claim 10, wherein the neotame is completely soluble in the organic solvent in step (1) and wherein the co-agent is completely soluble in the water in step (2).

12. The solid neotame-containing product of Claim 10 or 11, wherein the co-agent solution is subjected to pasteurization conditions and then cooled to below about 100°F prior to step (3).

13. The solid neotame-containing product of any one of Claims 10 to 12, wherein the organic solvent is selected from the group consisting of methanol, ethanol, ethylene glycol, propylene glycol, glycerin, ethyl acetate, triacetin, and mixtures thereof and wherein the co-agent is selected from the group consisting of hydrolyzed starch materials, starches, lactose, dextrose, maltodextrin, dextrose with maltodextrin, polydextrose, sugar alcohols, hydroxypropylmethylcellulose, edible organic acids, gums, and mixtures thereof.

14. The solid neotame-containing product of any one of Claims 10 to 13, wherein the organic solvent is ethanol and co-agent is maltodextrin.

15. The solid neotame-containing produce of any one of Claims 10 to 14, wherein the moisture and the average particle size of the solid neotame-containing product is about 1 to 5 percent and about 25 to about 500 microns, respectively.

16. The solid neotame-containing product of any one of Claims 10 to 15, wherein the moisture and the average particle size of the solid neotame-containing product is about 3 to 5 percent and about 50 to about 150 microns, respectively.
